# EUROPEAN PATENT APPLICATION

(11) **EP 1 931 043 A2**
(43) Date of publication of application: **11.06.2008**
(21) Application number: 07122199.8
(22) Date of filing: 04.12.2007
(51) Int. Cl.: H04B 1/08

(54) **Attachment and detachment mechanism for portable electronic device**

(30) Priority: 04.12.2006 JP 2006327663; 04.12.2006 JP 2006327664; 04.12.2006 JP 2006327665; 27.12.2006 US 645629; 27.12.2006 US 645642; 27.12.2006 US 645628; 27.12.2006 US 645672; 28.12.2006 US 646539; 28.12.2006 US 646477; 28.12.2006 US 646557; 28.12.2006 US 646478; 28.12.2006 US 646558; 28.12.2006 US 646498; 28.12.2006 US 646538; 28.12.2006 US 646479
(71) Applicant: FUJITSU TEN LIMITED, Kobe-shi, Hyogo, 652-0885 (JP)
(72) Inventor: Itoh, Yuusuke, Kobe-shi Hyogo 652-8510 (JP)
(74) Representative: Ward, James Norman

(57) **Abstract**

An attachment and detachment mechanism for detachably fixing a portable electronic device (200) to an apparatus body (100) includes a release pin (180) provided at the apparatus body to press the portable electronic device (200) installed in the apparatus body in a pressing direction away from the apparatus body, and a hook member (170) which engages with the portable electronic apparatus (200) pressed by the release pin to be fixed to the apparatus body.

## Description

The present invention relates to an attachment and detachment mechanism for a portable electronic device.

Recently, the audio navigation system which exhibits the portability of a compact and simple navigation unit called a personal navigation device and the high accuracy guiding function of the on-board navigation system has been proposed. The aforementioned audio navigation system includes an audio unit and the navigation unit, the main body of which is stored and fixed in a DIN opening of the vehicle. The system allows the navigation unit to be detached from the audio unit. The detached navigation unit contains the power source such that the navigation is performed in the detached state.

Japanese Patent Application Publication Nos. 2001-52473, 7-156719, and 7-132779 disclose the process for detachably installing the operation panel on/from the main body of the apparatus. Specifically, the structure including the lock member for locking the operation panel to the main body of the apparatus, and the arm member for pushing the operation panel forward upon release of the lock state caused by the lock member has been disclosed.

In the aforementioned patent documents, the arm member applies the pressing force to the operation panel to push the attachment and detachment mechanism forward only when the locked state by the lock member is released. As the operation panel is simply fixed to the device apparatus with the lock member, it may be brought into a shaky (loose) state in the installation state.

It is desirable to provide an attachment and detachment mechanism for the portable electronic device, which ensures to fix the detachable portable electronic device to the apparatus body.

According to the invention, an attachment and detachment mechanism for a portable electronic device for detachably installing the portable electronic device in an apparatus body includes a pressing member provided at the apparatus body for pressing the portable electronic device installed in the apparatus body in a direction opposite the apparatus body, and a fixing member which engages with the portable electronic device pressed by the pressing member so as to fix the portable electronic device to the apparatus body.

In the aforementioned structure, the portable electronic device may be constantly pressed against the apparatus body even in the engagement state. This makes it possible to firmly fix the portable electronic device to the apparatus body.

According to the invention, the pressing member may include a shaft portion serving as a center axis of rotation, and an arm portion attached to the shaft portion. When the fixing member is disengaged from the portable electronic device, the shaft portion turns to allow the arm portion to press the portable electronic device to the direction opposite the apparatus body.

In the aforementioned structure, the arm portion of the pressing member presses the portable electronic device in the direction opposite the apparatus body while rotating. This makes it possible to reduce the installation space for the attachment and detachment mechanism.

The invention ensures the portable electronic device to be fixed firmly to the apparatus body.

Reference will now be made, by way of example only, to the accompanying drawings, in which:
FIG. 1A is a view showing an appearance of an audio navigation system;
FIG. 1B is a view showing a state where the navigation unit is detached from the audio unit;
FIGS. 2A and 2B show each structure of a front panel viewed from the different angle;
FIG. 3A is a view showing a state where the navigation unit is attached to the front panel;
FIG. 3B is a view showing a state where the navigation unit is pushed by a release pin;
FIG. 4A is a view showing an appearance of the release pin; and
FIG. 4B is a view showing a spring attached to the release pin.

The preferred embodiment of the invention will be described referring to the drawings.

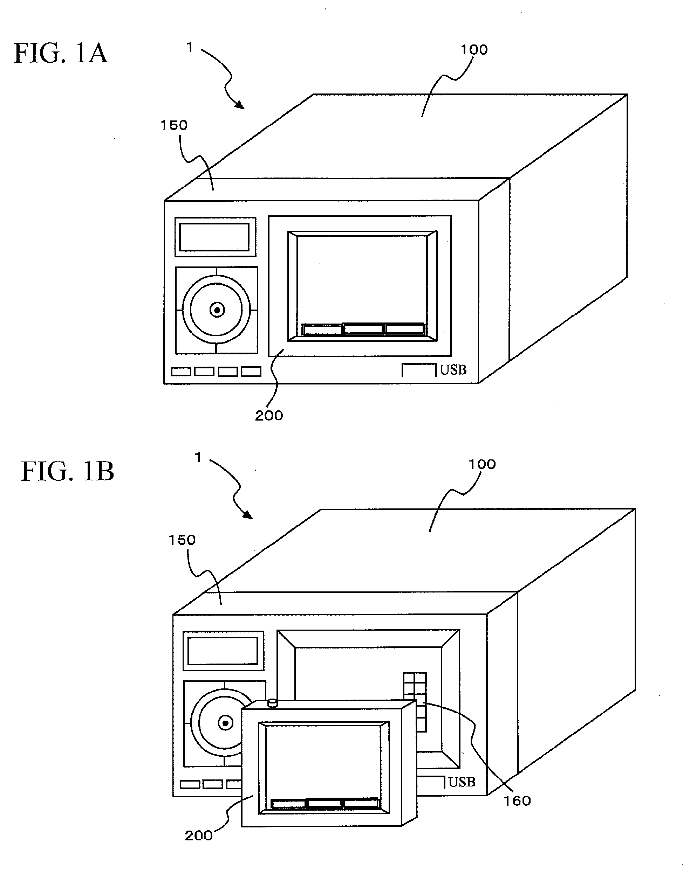

Each of FIGS. 1A and 1B shows a structure of an audio navigation system 1. FIG. 1A shows the state where a navigation unit 200 is attached to a front panel 150. FIG. 1B shows the state where the navigation unit 200 is detached from the front panel 150.

As shown in FIGS. 1A and 1B, the audio navigation system 1 includes an audio unit 100 mounted on the vehicle, and the navigation unit 200 detachably installed in the audio unit 100. The navigation unit 200 and the audio unit 100 are connected by a connector portion 160.

The navigation unit 200 is fitted with the front panel 150 of the audio unit 100, and may be removed from the audio unit 100 so as to be separately used as shown in FIG. 1B. The front panel 150 of the audio unit 100 is provided with a display portion, and an operation portion for operating the audio unit 100 in addition to the navigation unit 200.

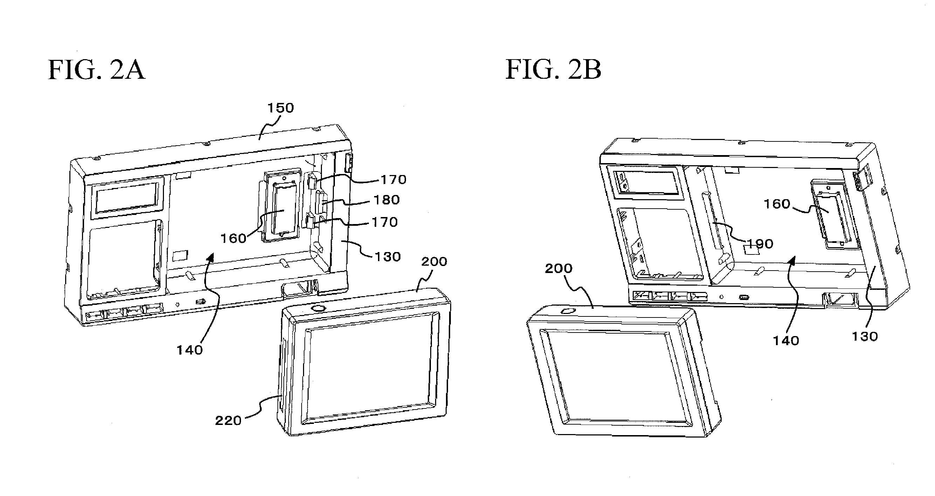

Each of FIGS. 2A and 2B shows the structure of a mount portion 140 for attaching the front panel 150 with which the navigation unit 200 fits. Each of FIGS. 2A and 2B shows the state of the front panel 150 viewed from a different angle.

The mount portion 140 formed as a recess shape to allow installation of the navigation unit 200 is provided with a connector portion 160, hook members 170, a release pin 180, and a convex portion 190.

The connector portion 160 serves to electrically couple the audio unit 100 with the navigation unit 200. The audio unit 100 and the navigation unit 200 are electrically coupled with a control line and a plurality of signal lines such as power wires. The connector portion 160 includes a connector at the audio unit side, and a connector at the navigation unit side, which will be connected to couple the aforementioned plural signal lines.

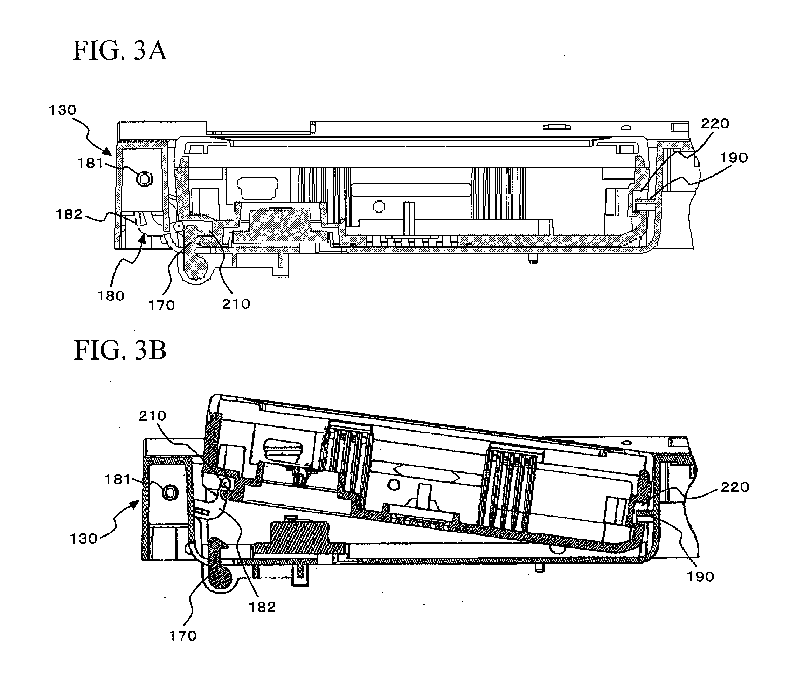

Two hook members 170 are aligned at one end of the mount portion 140 as shown in FIG. 2A. When the navigation unit 200 is installed in the front panel 150, the hook members 170 hook lock portion 210 of the navigation unit 200 such that the navigation unit 200 is fixed to the front panel 150. FIG. 3A shows the state where the hook member 170 is engaged with the lock portions 210 so as to fix the portable electronic device. The hook members 170 are turned when the removing switch (not shown) provided at the front panel 150 is pressed, and then removed from the lock portion 210.

The release pin 180 is provided in the vacant space 130 of the front panel 150. The vacant space 130 is made in the front panel 150 for accommodating the mount portion 140 to mount the navigation unit 200. The release pin 180 is provided in the vacant space 130.

The release pin 180 presses the navigation unit 200 installed in the front panel 150 toward the direction opposite (away from, out of) the front panel 150 (the direction will be referred to as the forward direction) with the urging force of the spring.

In the state where the navigation unit 200 is installed as shown in FIG. 3A, the release pin 180 presses the navigation unit 200 to fix the portable electronic device with the hook members 170 of the front panel 150. As the navigation unit 200 is constantly pressed against the front panel 150 upon installation, the navigation unit 200 is not brought into the shaky state, and may be firmly fixed to the front panel 150.

When the hook member 170 is disengaged from the lock portion 210 as shown in FIG. 3B, the navigation unit 200 is pushed forward under the pressing force of the release pin 180. This makes it possible to detach the navigation unit 200 fit with the front panel 150 therefrom.

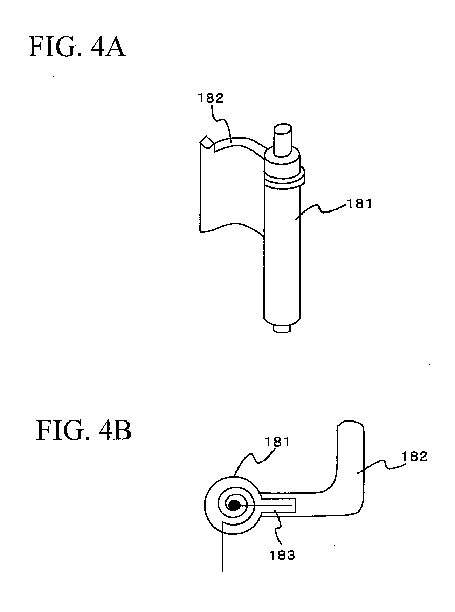

FIG. 4A shows a structure of the release pin 180. The release pin 180 includes a cylindrical shaft portion 181 serving as a rotating axis, and an arm portion 182 attached to the shaft portion 181 to press the navigation unit 200 accompanied with the rotation of the shaft portion 181. The arm portion 182 has an arch shape as shown in FIG. 4A, which presses the navigation unit 200 forward accompanied with the rotation of the shaft portion 181. The arch shape of the arm portion 182 may reduce the movable range of the arm portion 182, thus allowing the release pin 180 to be provided in the tiny space.

FIG. 4B is a top view of the release pin 180. A groove 183 extending from the shaft portion 181 to the arm portion 182 is formed in the upper portion of the release pin 180 such that a spring is fitted with the groove 183. When the navigation unit 200 is attached to the front panel 150, the arm portion 182 rotates to allow the urging force of the spring to act on the arm portion 182. When the hook members 170 are disengaged from the lock portion 210, the resultant spring force rotates the shaft portion 181 and the arm portion 182 to press the navigation unit 200 forward.

The convex portion 190 is formed on the end of the mount portion 140 of the front panel opposite the hook members 170 and the release pin 180 as shown in FIG. 2B. The convex portion 190 is fitted with the concave portion 220 formed in the navigation unit 200 to fix the other end of the navigation unit 200 to the front panel 150.

When the hook members 170 are disengaged from the lock portion 210, and the release pin 180 presses the navigation unit 200 forward, the navigation unit 200 turns (rotates) around the convex portion 190 serving as a supporting (pivot) point as shown in FIG. 3B.

The present embodiment allows the navigation unit 200 to be constantly pressed against the audio unit 100 even in the engagement state. This makes it possible to firmly fix the navigation unit 200 to the audio unit 100.

The arm portion 182 of the release pin 180 has the arch shape to press the navigation unit 200 toward the direction opposite the audio unit 100, thus reducing the space for the attachment and detachment mechanism including the arm portion and the hook portion. This makes it possible to reduce the size (thickness) of the apparatus body with the attachment and detachment mechanism.

The present invention is not limited to the preferred embodiments of the present invention have been described in details above, and within the spirit and scope of the present invention, various modifications and alterations can be made.

## Claims

1. An attachment and detachment mechanism for a portable electronic device for detachably installing the portable electronic device in an apparatus body, comprising:
a pressing member provided at the apparatus body for pressing the portable electronic device installed in the apparatus body in a direction opposite the apparatus body; and
a fixing member which engages with the portable electronic device pressed by the pressing member so as to fix the portable electronic device to the apparatus body.

2. The attachment and detachment mechanism for a portable electronic device according to claim 1, wherein:
the pressing member comprises a shaft portion serving as a center axis of rotation, and an arm portion attached to the shaft portion; and wherein,
when the fixing member is disengaged from the portable electronic device, the shaft portion turns to allow the arm portion to press the portable electronic device to the direction opposite the apparatus body.

3. The attachment and detachment mechanism according to claim 1 or 2, wherein the fixing member includes one or a pair of hook members.

4. The attachment and detachment mechanism according to any of claims 1 to 3, wherein the apparatus body is an audio unit.

5. An in-vehicle electronic system comprising an in-vehicle audio unit and a portable navigation unit detachably mountable to the in-vehicle audio unit, wherein the in-vehicle audio unit includes the attachment and detachment mechanism according to any of claims 1 to 3.
